(19) Europäisches Patentamt

European Patent Office

Office européen des brevets

(11) Publication number : **0 527 012 A2**

## (12) EUROPEAN PATENT APPLICATION

(21) Application number : **92306878.7**

(22) Date of filing : **28.07.92**

(51) Int. Cl.⁵ : $G06K\ 19/067$, $G06K\ 7/06$

(30) Priority : **03.08.91 GB 9116807**

(43) Date of publication of application :
**10.02.93 Bulletin 93/06**

(84) Designated Contracting States :
**DE DK ES FR GB IT SE**

(71) Applicant : **W.L. GORE & ASSOCIATES (UK) LTD**
**1 Bell Yard**
**London WC2A 2JP (GB)**

(72) Inventor : **Macpherson, Hugh**
**12 Balfour Crescent**
**Milnathort, Fife (GB)**

(74) Representative : **MacDougall, Donald Carmichael et al**
**Cruikshank & Fairweather 19 Royal Exchange Square**
**Glasgow G1 3AE, Scotland (GB)**

(54) Numerical identification system including electrically responsive tracks.

(57) A method of identifying an article is disclosed. The method includes the step of providing an identification system on an article, the system including two electrically responsive tracks (22, 24), each track (22, 24) defining an interrogation terminal (30, 32), a plurality of subtracts (34) extending between the tracks (22, 24), and subtrack connectors (36) for selectively connecting one of the subtracks (34) between the tracks (22, 24). Identifying units are associated with particular values of an electrical characteristic measurable across the terminals (30, 32), the electrical characteristic values depending on the particular subtrack (34) connecting the tracks (22, 24). The subtrack connector (36) is configured to connect a selected subtrack (34a) between the tracks (22, 24) and if an electrical signal is applied across the interrogation terminals (30, 32) to measure this electrical characteristic the identifying unit associated with the measured value of the electrical characteristic may be determined.

FIG. 1

## FIELD OF THE INVENTION

This invention relates to an identification system, and in particular, but not exclusively, to a numerical identification system utilising non-human readable characteristics which may be read and converted into human readable identifying numerals.

## BACKGROUND OF THE INVENTION

Numerical identification systems are widely used for a variety of purposes. In many cases, serial numbers or component numbers are provided in alpha-numeric form on labels, packaging, or on the articles themselves. However, in many circumstances it may be desirable to provide a machine-readable identification number in addition to or in place of the human readable number. Perhaps the most well-known form of machine readable identification is the "bar code" which may be printed on a label or on packaging which may be read, using a suitable bar code reader, to determine the particular identifying numeral associated with the bar code.

## SUMMARY OF THE INVENTION

According to one aspect of the present invention there is provided a numerical identification system including: two electrically responsive tracks, each track defining an interrogation terminal; a plurality of subtracks extending between the tracks; and subtrack connecting means forselectively connecting one of the subtracks between the tracks, an electrical characteristic being measurable across the terminals, each subtrack connection corresponding to a particular value of said characteristic, and each said particular value being associated with an identifying unit.

In use, the system is provided in or on an article and the subtrack connecting means is configured to connect one subtrack between the tracks, the subtrack being selected to represent a particular identifying unit, number or symbol, for example an element of a serial number or a component number. When a specially adapted measuring device is connected across the interrogation terminals, the value of the electrical characteristic associated with the subtrack is measured and preferably converted by the device to provide an indication or read out of the identifying unit, number or symbol.

In one embodiment of the present invention, each subtrack may be provided with a single associated connecting means, such that the electrical characteristic is established by configuring a selected single connecting means to form a connection.

The tracks, subtracks and connecting means may be provided on one or both sides of an insulating film, preferably at least a portion of the tracks or subtracks being provided on opposite sides of the film to assist in preventing the unit, number or symbol from being identified by visual examination of one side of the film. Preferably, the subtrack connecting means are provided at intersections of subtracks and tracks on opposite sides of the film, a connection being formed by providing an aperture in the film at the intersection and coating the wall of the aperture with electrically responsive material.

Further tracks and associated subtracks may be provided to allow use of, for example, serial numbers represented by two or more numerals, where each numeral represents an electrical characteristic of a particular track and subtrack configuration.

The tracks and subtracks may be arranged as a ladder network with the subtracks located at successively greater distances from the terminals and the electrical characteristic to be measured may be voltage drop or resistance, a subtrack connection located further from the terminals resulting in a measurably greater voltage drop or resistance across the terminals.

In the preferred embodiment the system is used to provide identifying numerals. The subtracks may be successively spaced from the terminals by unitary lengths of track and subtrack, such that if the electrical characteristic of the connecting portions of the tracks between the terminals and the first subtrack is known, or can be measured, and the unitary electrical characteristic of each subtrack and the tracks between each subtrack is known, the identifying number may be readily identified by applying a potential to a terminal, measuring the potential difference drop across the terminals, subtracting the element of the drop contributed by the connecting portions of the track, and dividing the remainder by the value corresponding to the unitary electrical characteristic, the result will be the identifying numeral.

To assist in determining the electrical characteristic of the connecting portions, two reference tracks may be provided, the reference tracks being of the same electrical length as the connecting portions of the other tracks, and the reference tracks being permanently connected by subtracks of the same electrical length as the subtracks between the tracks, and one of the reference tracks being connected to one of the original tracks by a permanently connected subtrack. If a reference potential is applied to two of the tracks the number represented by a particular subtrack connection may then be found by following the steps:

(a) measuring the potential drop between the interrogation terminals of two adjacent reference tracks, to find the relevant electrical characteristic $(R_c)$ of two connecting portions and one subtrack ;

(b) measuring the potential drop between the interrogation terminals of alternate tracks, to find the relevant electrical characteristic $(R_c + r_s)$ of

two connecting portions and two subtracks;
(c) comparing (a) and (b) and thus determining the electrical characteristic of a subtrack ($r_s$);
(d) measuring the potential drop between the interrogation terminals of two alternate tracks across the subtrack connecting means and connected subtrack (one of subtracks 0, 1, 2 ....x) to find the electrical characteristic ($R_c$ + $r_s$ + xrs) of two connecting portions, two subtracks, and the portion of track separating the connected subtrack from the connecting portions; and
(e) subtracting the contribution of two connecting portions and two subtracks ($R_c$ +$r_s$) and dividing the remainder (x$r_s$) by the subtrack value ($r_s$) to provide a numerical value (x) corresponding to the number represented by the connected subtrack.

This provides for a numerical identification system which, if provided with a number or series of tracks, preferably in the form of respective ladder networks and each pair of tracks having ten associated subtracks (0, 1, 2 .... 9), may represent decimal identifying numbers.

In accordance with a further aspect of the present invention there is provided a method of identifying an article, comprising: providing a numerical identification system on an article, the system including two electrically responsive tracks, each track defining an interrogation terminal, a plurality of subtracks extending between the tracks, and subtrack connecting means for selectively connecting one of the subtracks between the tracks; associating identifying units with particular values of an electrical characteristic measurable across the terminals, the electrical characteristic values depending on the particular subtrack connecting the tracks; and configuring the subtrack connecting means to connect one of the subtracks between the tracks.

BRIEF DESCRIPTION OF THE DRAWINGS

These and other aspects of the present invention will now be described, by way of example, with reference to the accompanying drawings, in which:

Fig. 1 is a diagrammatic view of the circuit layout of a numerical identification system circuit layout, in accordance with a first preferred embodiment of the present invention;

Fig. 2 is a representation of the layout of Fig. 1, in which the circuit elements are identified by respective electrical characteristics;

Fig. 3 is a diagrammatic representation of a reading device for use with the system of Fig. 1; and

Fig. 4 is a diagrammatic representation of the circuit layout of a numerical identification system in accordance with a further preferred embodiment of the present invention.

DETAILED DESCRIPTION OF THE DRAWINGS

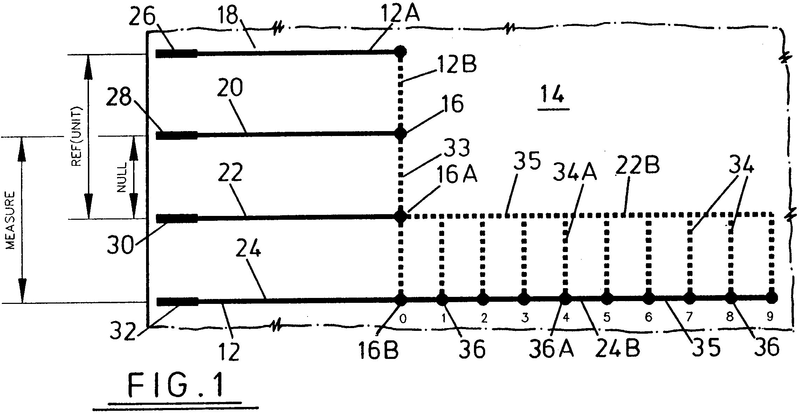

Reference is first made to Fig. 1 of the drawings, which shows the circuit layout 10 of a numerical identification system, in accordance with a preferred embodiment of the present invention. The circuit is formed by lines 12 of electrically responsive material, in this case lines of semi-conductive ink in the form of carbon-filled polyester adhesive, which have been printed on both sides of an insulating film 14, which in this example is formed of polyester. The lines 12A on the uppermost side of the film 14 are shown in full, whereas the lines 12B on the underside of the film 14 are shown as broken lines. The lines 12A, 12B overlap at various pads 16. Where it is desired to provide a connection between the overlapping lines 12A, 12B an aperture is formed at the pad location 16A prior to printing one of the lines 12A, 12B, such that when the line is printed the semi-conductive ink extends through the aperture to form a connection between the lines. No connection between the lines 12A, 12B exists where the pad 16B has not been apertured.

The lines 12 will normally be overprinted with a non conductive layer with similar colouring to the lines 12 to conceal the lines of the film, and additional insulating films may be then applied above the overprinting layer to further protect the circuit. The circuit may be formed as a part of a product, such as the laminate used to form the enclosure disclosed in British Patent Application Publication No. GB 2220513A, to W L Gore & Associates Inc, or may be formed as a label or the like for applying to objects.

The lines 12 are provided in the form of four tracks 18, 20, 22, 24, each track defining an interrogation terminal 26, 28, 30, 32 at an edge of the film 14. Connecting portions of the tracks extend from the respective terminals to respective pads 16. Two of the tracks 18, 20 terminate at the pads 16, however, the two remaining tracks 22, 24 extend beyond the pads 16, one of the tracks 22 continuing on the underside of the film 14 and the remaining track 24 continuing on the upper side of the film. These portions of track will be referred to as extensions 22B, 24B. Ten subtracks 34 extend at equi-spaced intervals from the track extension 22B to intersect the other track extension 24B to define a ladder network, subtrack connecting means in the form of pads 36 being provided at the intersections. The electrical lengths of the portions 35 of the track extensions 22B, 24B which extend between each subtrack 34 correspond and are equal to half the electrical length of each subtrack 34. The significance of this will be explained subsequently.

It will be noted that each pad 36 is numbered from 0 to 9 for identification purposes, though these numerals would not appear on the actual film. It will also be noted that only one pad 36A is apertured such that only one subtrack (identified as subtrack 4) connects the track extensions 22B, 24B. As will be explained, the particular electrical characteristics of the subtrack connection corresponds to an identifying numeral, in this case 4, which may be identified using an appropriate device.

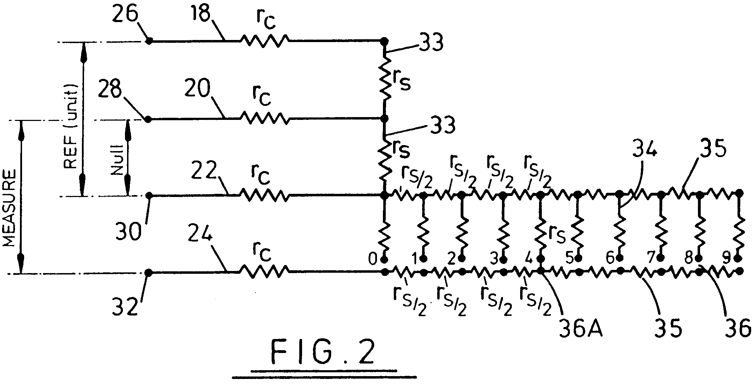

Reference is now also made to Fig. 2 of the drawings, which illustrates the circuit layout of Fig. 1, where each of the line elements is represented by a particular electrical characteristic, in this case a resistance value. Each of the track portions 18, 20, 22, 24 is represented by a resistance $r_c$, whereas each subtrack 34 is represented by a resistance $r_s$. It will also be noted that the linking tracks 33 which extend between the tracks 18, 20, 22 have the same resistance as the subtracks 34, and, as was mentioned above, the connecting portions 35 of the track extensions 22B, 24B are represented by half the resistance of a subtrack 34. It will also be noted that the subtrack pads 36 are represented as switches, only one switch being closed, corresponding to the apertured pad 36A in Fig. 1.

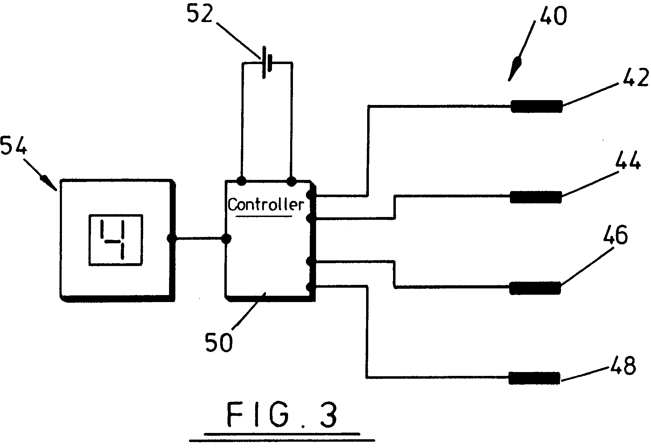

Before describing the method for reading the circuit, reference is made briefly to Fig. 3 of the drawings, which illustrates an exemplary reading device 40 provided with four connecting terminals 42, 44, 46, 48 for connection with respective interrogation terminals 26, 28, 30, 32 of the tracks 18, 20, 22, 24. The connecting terminals 42, 44, 46, 48 are connected to an appropriate controller 50 which is linked to a reference potential source, in this example provided by a battery 52, and an LED readout 54.

When the reading device 40 is connected to the object carrying the circuit 10 a reference potential is applied to the terminals 26, 30 and the number represented by the particular subtrack connection found by following the steps set out below:

(It should be noted that in the following description that the potential drop between various terminals is represented by summing the various resistance values as shown in Fig. 2)

(a) first measure the potential drop between the terminals 28, 30 of two adjacent reference tracks, for example 20 and 22, to find the electrical characteristic ($R_c$) of the two connecting portions and a linking track or subtrack ($R_c = r_c + r_s + r_c$);

(b) measure the potential drop between the terminals 26, 30 of alternate tracks, 18 and 22, to find the relevant electrical characteristic ($R_c + r_s$) of two connecting portions and two subtracks ($2r_c + 2r_s = R_c + r_s$);

(c) compare (a) and (b) and thus determine the electrical characteristic of a single subtrack ($r_s$);

(d) measure the potential drop between the terminals 28, 32 of the two alternate tracks 20, 24 across the connected subtrack 34A to find the electrical characteristic ($R_c + r_s + xr_s$) of two connecting portions, two subtracks and the portions of track separating the adjacent subtracks, in this case this being represented by $r_c + r_s + (r_s/2 \times 4) + r_s + (r_s/2 \times 4) + r_c = R_c + 6r_s$;

(e) subtracting the contribution of the connection portions and the linking track ($R_c$) and one subtrack ($r_s$) and dividing the remainder ($xr_s$) by the subtrack value ($r_s$) to provide a numerical value (x, in this case 4) corresponding to the connected subtrack.

The above described system may thus be used to provide identifying numerals from 0 to 9. It will be noted that a greater number of identifying numbers could be provided by simply extending the track extensions 22B, 24B and providing further subtracks 34.

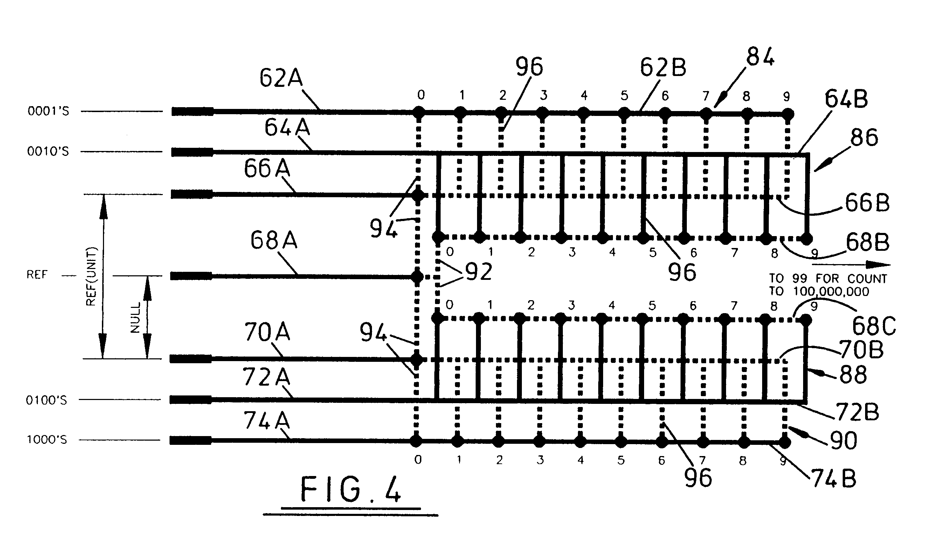

A further means of providing a larger selection of numerals is to provide further tracks and associated subtracks, such as is illustrated in Fig. 4 of the drawings, which illustrates a circuit layout 60 for use in providing identifying numerals between 0 and 9999. Seven tracks 62, 64, 66, 68, 70, 72, 74 are provided, and in this case each track includes a connecting portion, identified by the suffix A and an extension portion identified by the suffix B. It will be noted that one track 68 includes two extension portions 68B, 68C, such that four ladder networks are provided. The subtrack pads 82 have been apertured such that the circuit represents the number 0419 and the method for reading the number is substantially similar to that described above with reference to the circuit 10, though in this case each subtrack configuration 84, 86, 88, 90 is individually monitored as one of the tracks 68 is shared by two subtrack configurations 86, 88. It will be noted that a number of the connecting track portions 64A, 72A are longer than the other connecting portions 62A, 66A, 68A, 70A, 74A though this is compensated for by providing linking tracks 92, forming parts of track extension 68B, 68C, which are shorter than the other linking tracks 94, which are of the same electrical length as the subtracks 96.

It will be clear to those of skill in the art that the above described embodiments are merely exemplary of the present invention, and that various modifications and improvements may be made to these embodiments without departing from the scope of the invention; in the above examples the electrical characteristics of the various lines which are measured are represented as functions of potential drop and resistance, though clearly it is possible for other electrical characteristics to be used.

Further, although described above with reference to providing a component or identification number, the present invention may also be utilised in other applications, for example in measuring instruments having callipers where a moveable calliper is fixed to a sliding contact which moves over a ladder network of subtracks and acts as subtrack connecting means, the particular subtrack which is connected depending on the position of the sliding contact on the network and thus the relative position of the calliper. The electrical characteristic measured across the connected subtract may thus be equated to a associated linear displacement of the calliper.

**Claims**

1. An identification system including: two electrically responsive tracks (22, 24), each track defining an interrogation terminal (30, 32); a plurality of subtracks (34) extending between the tracks (22, 24); and subtrack connecting means (36) for selectively connecting one of the subtracks (34) between the tracks (22, 24), an electrical characteristic being measurable across the terminals (30, 32), each available subtrack connection corresponding to a particular value of said characteristic, and each said particular value being associated with an identifying unit.

2. The system of claim 1 in which each subtrack (34) is provided with a single associated connecting means (36), such that the electrical characteristic is established by configuring a selected single connecting means(36A) to form a connection.

3. The system of claim 1 or 2 in which the tracks (22, 24), subtracks (34) and connecting means (36) are provided on one or both sides of an insulating film (14).

4. The system of claim 3 in which at least a portion of the tracks (22, 24) or subtracks (34) are provided on opposite sides of the film (14) to assist in preventing the unit from being identified by visual examination of one side of the film.

5. The system of claim 4 in which the subtrack connecting means (36) are provided at intersections of subtracks (34) and tracks (22, 24) on opposite sides of the film (14), a connection (36a) being provided by an aperture in the film (14) at a selected intersection and the wall of the aperture being coated with electrically responsive material.

6. The system of any one of the preceding claims wherein the tracks (22, 24) and the subtracks (34) are arranged as a ladder network with the subtracks (34) located at successively greater distances from the terminals (30, 32).

7. The system of claim 6, for providing identifying numerals, in which the subtracks (34) are successively spaced from the terminals (30, 32) by portions of track (35) of unitary length, such that if the resistance ($r_c$) of the connecting portions of the tracks (22, 24) between the terminals (30, 32) and the first subtrack (34) is known, or can be measured, and the unitary resistance value ($r_s$) of each subtrack (34) and the portions of tracks (35) between each subtrack is known, the identifying number may be identified by applying a potential to a terminal (30), measuring the potential difference drop across the terminals (30, 32), subtracting the element of the drop contributed by the connecting portions of the track, and dividing the remainder by the value of the potential difference drop corresponding to the unitary resistance value ($r_s$), the result will be the identifying numeral.

8. The system of claim 7 further comprising two reference tracks (18, 20) of the same electrical length as the connecting portions of the other tracks (22, 24), and the reference tracks (22, 24) being permanently connected by subtracks (33) of the same electrical length as the subtracts (34) between the tracks (22, 24), and one of the reference tracks (20) being connected to one of the other tracks (22) by a permanently connected subtrack (33), such that if a reference potential is applied to two of the tracks (18, 20) the number represented by a particular subtrack connection may be found by following the steps:

   (a) measuring the potential drop between the interrogation terminals (28, 30) of two adjacent reference tracks (20, 22), to find the relevant electrical characteristic ($R_c$) of two connecting portions and one subtrack ($R_c = r_c + r_s + r_c$);

   (b) measuring the potential drop between the interrogation terminals (26, 30) of alternate tracks (18, 22), to find the relevant electrical characteristic ($R_c + r_s$) of two connecting portions and two subtracks;

   (c) comparing (a) and (b) and thus determining the electrical characteristic of a subtrack ($r_s$);

   (d) measuring the potential drop between the interrogation terminals (28, 32) of two alternate tracks (20, 24) across the subtrack connecting means and connected subtrack (34A) to find the electrical characteristic ($R_c + r_s + xrs$) of two connecting portions, two subtracks, and the portion of track separating the connected subtrack from the connecting portions; and

   (e) subtracting the contribution of two connecting portions and two subtracks ($R_c + r_s$) and dividing the remainder ($xr_s$) by the subtrack value ($r_s$) to provide a numerical value ($x$) corresponding to the number represented by the connected subtrack.

9. The system of any one of the claims 1 to 8 in which a series of tracks (62, 64, 66, 68, 70, 72, 74) and subtracks (84, 86, 88, 90) are provided in the form of respective ladder networks and each pair of tracks has ten associated subtracks to represent decimal identifying numbers.

10. A method of identifying an article, comprising the steps:

providing an identification system on an article, the system including two electrically responsive tracks, each track defining an interrogation terminal, a plurality of subtracks extending between the tracks, and subtrack connecting means for selectively connecting one of the subtracks between the tracks;

associating identifying units with particular values of an electrical characteristic measurable across the terminals, the electrical characteristic values depending on the particular subtrack connecting the tracks;

configuring the subtrack connecting means to connect a selected subtrack between the tracks;

applying an electrical signal across the interrogation terminals to measure said electrical characteristic;

determining the identifying unit associated with the measured value of said electrical characteristic; and

providing an indication of said identifying unit.

FIG.1

EP 0 527 012 A2

FIG. 2

EP 0 527 012 A2

FIG.3

EP 0 527 012 A2

FIG.4